# EUROPÄISCHE PATENTSCHRIFT

(11) **EP 4 307 188 B1**
(45) Veröffentlichungstag und Bekanntmachung des Hinweises auf die Patenterteilung: **21.01.2026**
(21) Anmeldenummer: 22184738.7
(22) Anmeldetag: 13.07.2022
(51) Int. Cl.: G06Q 10/00, B65F 1/14

(54) **BEHÄLTERBEREITSTELLUNG**
CONTAINER PROVISION
FOURNITURE DES RÉCIPIENTS

(43) Veröffentlichungstag der Anmeldung: 17.01.2024
(73) Patentinhaber: c-trace GmbH, 33605 Bielefeld Nordrhein-Westfalen (DE)
(72) Erfinder: Wölfert, Gerolf, 32105 Bad Salzuflen (DE)
(74) Vertreter: Ter Meer Steinmeister & Partner

(56) Entgegenhaltungen:
- WO-A1-2004/094269
- WO-A1-2010/054232
- WO-A1-2017/173381
- CA-A1- 3 115 475
- US-A1- 2007 260 466
- US-A1- 2014 236 446
- US-A1- 2014 340 197
- US-A1- 2019 019 167
- US-A1- 2020 348 681
- US-A1- 2022 021 803
- US-B1- 10 594 991
- US-B1- 10 692 353
- DER BUNDESBEAUFTRAGTE F�R DEN DATENSCHUTZ UND DIE INFORMATIONSFREIHEIT: "Datenschutz - meine Rechte", 1 January 2019 (2019-01-01), XP93122119, Retrieved from the Internet <URL:https://www.bfdi.bund.de/SharedDocs/Downloads/DE/Flyer/Datenschutz_MeineRechte.pdf?__blob=publicationFile&v=6> [retrieved on 20240122]

## Beschreibung

Die vorliegende Erfindung betrifft ein Verfahren zum Nachweis der Bereitstellung zumindest eines Behälters, der durch ein Entsorgungsfahrzeug zu entleeren ist, sowie ein entsprechendes Entsorgungsfahrzeug.

Die korrekte und vollständige Entsorgung von Abfall setzt unter anderem voraus, dass der Abfall den Entsorgungsunternehmen vollständig zur Verfügung gestellt wird, so dass er durch entsprechende Entsorgungsfahrzeuge abgeholt werden kann. Es ist daher allgemein üblich, dass die Abfallverursacher wie z. B. Privathaushalte die ihnen zugeordneten Abfallbehälter zugänglich und pünktlich bereitstellen, beispielsweise am Straßenrand, so dass sie während der vorgesehenen Tour des Entsorgungsfahrzeugs schnell und ohne größere Umstände entleert werden können.

WO 2017/173381 A1 offenbart ein Verfahren zum Nachweis der Leerung einzelner Abfallbehälter, bei welchem die Behälter durch ein Entsorgungsfahrzeug identifiziert werden können und eine Positionsbestimmung des Fahrzeugs durchgeführt werden kann.

US 2020/348681 A1 offenbart ein Verfahren zur Aufnahme eines ein Entsorgungsfahrzeug umgebenden Bereichs an vorbestimmten Positionen des Entsorgungsfahrzeug bei Vorhandensein oder Nichtvorhandensein eines Indikators im Sichtfeld des Entsorgungsfahrzeug.

US 2014/236446 A1 offenbart ein Müllfahrzeug-Steuersystem und ein Verfahren zum Steuern eines Müllfahrzeugs, das den Standort eines Müllcontainers erkennt und das Müllfahrzeug an einer vorbestimmten Position in Bezug auf den Müllcontainer anhält.

US 2007/260466 A1 offenbart ein Steuersystem für ein Abfallentsorgungsfahrzeug und ein Verfahren zur Steuerung desselben, wobei zumindest ein Abfallbehälter-Ortsbestimmungssensor eingesetzt wird.

US 10 692 353 B1 offenbart ein Video-Analysesystem zur Überwachung im Bereich der Abfallentsorgung.

Das Dokument "Datenschutz - meine Rechte", herausgegeben von der Bundesbeauftragten für den Datenschutz und die Informationsfreiheit, 1. Januar 2019, XP93122119, https://www.bfdi.bund.de/SharedDocs/Downloads/DE/Flyer/Datenschutz_MeineRechte.pdf?__ blob=publicationFile&v=6 stellt eine Bürgerinformation zu Rechten im Datenschutz dar.

US 2020/348681 A1 offenbart ein Abfallentsorgungssystem, umfassend ein Bilderfassungssystem und eine Datenverarbeitungseinheit, welche das Bilderfassungssystem zur Erfassung eines Bildes steuert, wenn von einem Sensor angezeigt wird, dass sich innerhalb des Bildfeldes ein Indikator befindet. Dieser Indikator kann die Anwesenheit oder die Abwesenheit eines Objekts wie etwa eines Abfallbehälters anzeigen.

US 10 594 991 B1 offenbart ein System und ein Verfahren zur Organisation der Abfallentsorgung unter Einsatz optischer Sensoren, die in ein Entsorgungsfahrzeug integriert sind.

WO 2004/094269 A1 offenbart ein System und ein Verfahren zur Abfallentsorgung, umfassend eine Datenbank, in welcher ein Nutzerprofil gespeichert ist. Dieses System umfasst eine automatisierte Rechnungsstellung an den Nutzer für die Abfallentsorgung.

US 2014/340197 A1 offenbart ein Abfallentsorgungssystem, in welchem ein Abfallbehälter optisch identifiziert werden kann.

WO 2010/054232 A1 offenbart ein Verfahren zur Steuerung, Nachverfolgung und Überwachung von Abfallbehältern unter Einsatz von RFID-Markierungen.

US 2022/021803 A1 offenbart ein Abfallentsorgungssystem, bei welchem eine Kamera an einem Entsorgungsfahrzeug angebracht ist, sowie ein RFID-Markierungslaser zum Auslesen von RFID-Markierungen an den Abfallbehältern.

CA 3 115 475 A1 offenbart ein Abfallentsorgungssystem, in welchem eine Drohne zur Überwachung des Entsorgungsstatus eingesetzt wird.

US 2019/019167 A1 offenbart eine Vorrichtung, ein System und ein Verfahren zur Überwachung, Steuerung und Optimierung der Abfallentsorgung.

Trifft beim Entsorgungsunternehmen eine Beschwerde eines Abfallverursachers aufgrund einer angeblich nicht vorgenommenen Leerung ein, so ist dieser häufig verpflichtet, die Leerung mittels einer Nachfahrt nachzuholen, d. h. das Entsorgungsfahrzeug muss eine bereits absolvierte Tour wiederholen. Dies führt zu erhöhten Entsorgungskosten und zu einer Verschlechterung der CO₂-Bilanz der Entsorgung. Häufig besteht allerdings der Verdacht, dass die korrekte Leerung nicht möglich war, da der Behälter vom Abfallverursacher nicht korrekt bereitgestellt wurde. Kann dies nachgewiesen werden, so kann die Verpflichtung des Entsorgers zu einer Nachfahrt entfallen, da das Verschulden für die nicht vorgenommene Leerung beim Abfallverursacher liegt. Allerdings sind bisher keine Möglichkeiten bekannt, die korrekte (bzw. nicht korrekte) Bereitstellung eines zu entleerenden Behälters zu kontrollieren und insbesondere die Beweislast bezüglich der Bereitstellung zu Gunsten des Entsorgers umzukehren.

Es ist daher eine Aufgabe der vorliegenden Erfindung, ein Verfahren zu schaffen, welches dem Entsorger ermöglicht, einen Nachweis über die nicht korrekt vorgenommene Bereitstellung zumindest eines Behälters zur Verfügung zu stellen. Eine weitere Aufgabe besteht in der Schaffung eines entsprechenden Entsorgungsfahrzeugs.

Diese Aufgabe wird erfindungsgemäß durch ein Verfahren mit den Merkmalen des Anspruchs 1 sowie durch ein Entsorgungsfahrzeugs mit den Merkmalen des Anspruchs 11 gelöst.

Das erfindungsgemäße Verfahren ist durch die folgenden Schritte gekennzeichnet:
- Bereitstellung von Identifikationsdaten zur Identifikation von Behältern und von geolokalen Daten, die vorbestimmten Positionen der Behälter entsprechen,
- Aufnahme von Bilddaten durch ein Entsorgungsfahrzeug an allen vorbestimmten Positionen der Behälter, wobei an jeder vorbestimmten Position eines Behälters aufgenommene Bilddaten den Identifikationsdaten dieses Behälters zugeordnet werden und gespeichert werden,
- Durchführung eines Identifikationsvorgangs durch das Entsorgungsfahrzeug durch Abgleich der Identifikationsdaten mit einer Kennung an einem zur Leerung bereitgestellten Behälter,
- Löschung der Bilddaten, bis auf diejenigen, die zumindest einem nicht identifizierten Behälter zugeordnet sind.

Bei der Bereitstellung der Identifikationsdaten zur Identifikation eines Behälters und der geolokalen Daten, die einer vorbestimmten Position des Behälters entsprechen, kann es sich um eine lokale Speicherung derartiger Daten in verknüpfter Form handeln. Ein Satz geolokaler Daten kann somit einem einzigen individuellen Behälter eindeutig entsprechen. Die geolokalen Daten können z.B. als GPS-Daten (für: Global Positioning System) vorliegen.

Die Aufnahme der Bilddaten durch ein Entsorgungsfahrzeug kann vorgenommen werden, wenn dieses Fahrzeug sich auf seiner vorbestimmten Route zur Entleerung mehrerer Behälter befindet und somit deren vorbestimmte Positionen passiert. Bei den Bilddaten kann es sich beispielsweise um Videodaten handeln, wobei die Bilddaten, die an einer vorbestimmten Position eines Behälters aufgenommen werden, einer Videosequenz entsprechen können. Diese werden dann den Identifikationsdaten des betreffenden Behälters zugeordnet und gespeichert. Diese Speicherung kann zumindest temporär in einem Speicher stattfinden, der sich z.B. an Bord des Entsorgungsfahrzeugs oder auch außerhalb desselben befindet.

Durch die aufgenommenen Bilddaten lassen sich der Ort, an welchem ein Behälter zur Entleerung erwartet wird, und dessen Umgebung erfassen. Die Bilddaten, die einem Behälter zugeordnet sind, lassen somit erkennen, ob der Behälter sich tatsächlich dort befunden hat oder nicht. Beispielsweise kann das Entsorgungsfahrzeug mit einer seitlichen Kamera ausgestattet sein, die den Bereich neben dem Fahrzeug erfasst. Während das Entsorgungsfahrzeug seine Leerungstour absolviert, werden die vorbestimmten Positionen der zu leerenden Behälter somit nacheinander abgefahren und sukzessive erfasst. Die Speicherung dieser Bilddaten findet somit unter Zuordnung der Bilddaten zu den Identifikationsdaten der Behälter statt, unabhängig davon, ob die Behälter sich tatsächlich an der jeweils vorbestimmten Position befunden haben oder nicht. In diesem Zusammenhang sind auch Mehrfachzuordnungen möglich, insofern, als dass Bilddaten, die z.B. im Überlappungsbereich der Umgebungsbereiche zweier vorbestimmter Behälterpositionen aufgenommen werden, auch den Identifikationsdaten beider Behälter zugeordnet werden.

Erreicht das Entsorgungsfahrzeug einen zu leerenden Behälter, wird ein Identifikationsvorgang durchgeführt, und zwar derart, dass Identifikationsdaten mit einer am Behälter vorgesehenen Kennung abgeglichen werden. Ein korrekt bereitgestellter Behälter kann somit identifiziert werden. Der Identifikationsvorgang kann beispielsweise während der Leerung des Behälters durchgeführt werden, so dass die Kennung durch am Entsorgungsfahrzeug vorhandene Sensoren erkannt wird.

Aus datenschutzrechtlichen Gründen werden dann alle aufgenommenen Bilddaten gelöscht, bis auf diejenigen Bilddaten, die zumindest einem nicht identifizierten Behälter zugeordnet sind. Aufgrund der fehlenden Identifikation des Behälters während der Leerungstour ist nämlich davon auszugehen, dass dieser nicht korrekt bereitgestellt wurde. Die Bilddaten, die den Identifikationsdaten dieses Behälters zugeordnet worden sind, können somit als Beweis für den Entsorger dienen, dass der betreffende Abfallverursacher den Behälter nicht korrekt bereitgestellt hat. Sind Bilddaten mehreren Behältern zugeordnet, so werden diese nur dann gelöscht, wenn alle diese Behälter auch vom Entsorgungsfahrzeug identifiziert wurden. Ist unter den zugeordneten Behältern allerdings zumindest einer, der nicht identifiziert wurde und somit nicht vorhanden war, bleiben diese Bilddaten gespeichert und werden nicht gelöscht.

Diese Vorgehensweise löst das datenschutzrechtliche Problem, dass abhängig von der gesetzlichen Lage unter Umständen keine anlasslose Datenspeicherung zulässig ist, zumindest nicht über einen längeren Zeitraum. Im Rahmen des erfindungsgemäßen Verfahrens können jedoch zunächst sämtliche Bilddaten zu allen vorbestimmten Positionen aller Behälter temporär gespeichert werden und nach der Prüfung, ob Bilddaten vorhanden sind, denen zumindest ein nicht identifizierter Behälter zugeordnet wurde, können die übrigen Bilddaten gelöscht werden.

Durch das erfindungsgemäße Verfahren lassen sich somit Beweise über nicht zur Leerung bereitgestellte Behälter festhalten, ohne gegen gesetzliche Vorschriften zu verstoßen.

Gemäß einer bevorzugten Ausführungsform der vorliegenden Erfindung umfassen die geolokalen Daten einen Bereich mit einer vorbestimmten Größe. Bei diesem Bereich kann es sich beispielsweise um einen sogenannten Geofencing-Bereich handeln, also etwa um einen Bereich mit einem vorbestimmten Radius um eine vorbestimmte Position eines Behälters herum. Dies kann dazu genutzt werden, den Bereich zu begrenzen, in welchem Bilddaten an der vorbestimmten Position des zumindest einen Behälters durch das Entsorgungsfahrzeug aufgenommen werden. Die dort aufgenommenen Bilddaten bilden dann zumindest einen Teil des Geofencing-Bereichs ab. Ferner kann die Überschreitung der Grenze eines Geofencing-Bereichs durch das Entsorgungsfahrzeug, dessen Position durch ein GPS-System lokalisierbar sein kann, die Aufnahme der Bilddaten innerhalb dieses Geofencing-Bereichs auslösen und umgekehrt kann diese Aufnahme beendet werden, wenn das Entsorgungsfahrzeug diesen Geofencing-Bereich wieder verlässt. Auf diese Weise lässt sich vermeiden, insbesondere auf Leerungstouren, auf denen die vorbestimmten Positionen der Behälter weit auseinanderliegen, eine große Menge von Bilddaten im Bereich zwischen den vorbestimmten Behälterpositionen aufzuzeichnen, die für den vorliegenden Zweck, also die Feststellung, ob Behälter bereitgestellt wurden oder nicht, irrelevant sind. Die Aufnahme der Bilddaten wird dann lediglich in den relevanten Bereichen ausgeführt, nämlich im Wesentlichen da, wo sich auch Behälter befinden sollen. Hierdurch werden der Aufwand und der Platzbedarf bei der Speicherung stark reduziert.

Gemäß einer weiteren bevorzugten Ausführungsform der vorliegenden Erfindung umfasst die Kennung am Behälter rein optisch und/oder elektronisch lesbares Mittel. Bei einem optisch lesbaren Mittel kann es sich z.B. um einen QR-Code handeln, der von einem entsprechenden Scanner am Entsorgungsfahrzeug eingelesen wird. Bei einem elektronisch lesbaren Mittel kann es sich beispielsweise um einen RFID-Chip handeln, der durch eine entsprechende Leseeinrichtung am Entsorgungsfahrzeug ausgelesen wird. Diese kann beispielsweise an einer Aufnahme für einen Behälter zur Leerung vorgesehen sein, so dass der Identifikationsvorgang dann durchgeführt wird, wenn ein Behälter zur Leerung an das Entsorgungsfahrzeug angehängt wird. Es kommen jedoch auch andere optische und/oder elektronisch lesbare Mittel in Betracht.

Weiter vorzugsweise können die nicht gelöschten Bilddaten drahtlos von einer zentralen Datenverwaltungseinheit abgerufen werden. Die nicht gelöschten Bilddaten können dann zentral gespeichert werden und beispielsweise auch Personendaten zugeordnet werden, die die persönliche Identität eines Abfallverursachers repräsentieren.

Weiter vorzugsweise werden die nicht gelöschten Bilddaten automatisch auf kritische Inhalte geprüft und kritische Inhalte innerhalb der Bilddaten werden automatisch unkenntlich gemacht. Dies kann durch eine Softwareeinrichtung mithilfe künstlicher Intelligenz durchgeführt werden, und zwar unter Einsatz maschinellen Lernens. Derartige kritische Inhalte können z.B. solche Inhalte betreffen, die Rückschluss auf die Identität von Personen geben. Denkbar ist beispielsweise die automatische Erkennung von Gesichtern, Nummernschildern, Hausnummern oder dergleichen, so dass diese innerhalb der Bilddaten nicht mehr erkennbar sind. Eine derartige Prüfung kann durch eine Softwareeinrichtung noch im Entsorgungsfahrzeug vor einer Übertragung an eine zentrale Datenverwaltungseinheit stattfinden, so dass Daten, die kritischen Inhalten entsprechen, erst gar nicht übertragen werden.

Weiter vorzugsweise erfolgt die Prüfung und Unkenntlichmachung der Bilddaten über eine künstliche Intelligenz. Hierbei kann beispielsweise ein neuronales Netzwerk eingesetzt werden, dass durch maschinelles Lernen dazu in der Lage ist, kritische Inhalte zu erkennen. Es kann somit eine entsprechende Recheneinrichtung vorgesehen sein, die eine Software mit einer derartigen künstlichen Intelligenz umfasst.

Gemäß einer weiteren bevorzugten Ausführungsform der Erfindung wird die Position des Identifikationsvorgangs des zur Leerung bereitgestellten Behälters mit der vorbestimmten Position abgeglichen. So lässt sich feststellen, ob sich der Behälter, der dem Identifikationsvorgang unterzogen wird, an der vorbestimmten Position befindet oder nicht. Diese Information kann dazu verwendet werden festzustellen, wie weit die tatsächliche Position und die erwartete (vorbestimmte) Position des Behälters voneinander abweichen. Gegebenenfalls lässt sich für eine künftige Leerungstour die vorbestimmte Position des Behälters an eine tatsächlich während eines auf einer vorhergehenden Tour vorgenommenen Identifikationsvorgangs festgestellten Position anpassen.

Gemäß einer weiteren Ausführungsform der Erfindung wird die Position des Identifikationsvorgangs des zur Leerung bereitgestellten Behälters bei einer Abweichung von der vorbestimmten Position gespeichert.

Gemäß einer weiteren Ausführungsform der Erfindung wird die Position des Identifikationsvorgangs des zur Leerung bereitgestellten Behälters für eine nachfolgende erneute Durchführung des Verfahrens als aktualisierte vorbestimmte Position dieses Behälters bereitgestellt. Auf jeder Leerungstour lassen sich somit die vorbestimmten Positionen der Behälter aktualisieren und an die Positionen anpassen, an denen sie von den Abfallverursachern gewöhnlich zur Verfügung gestellt werden.

Gemäß einer weiteren bevorzugten Ausführungsform der Erfindung umfassen die Identifikationsdaten nutzerbezogene Daten, die der Identität eines Nutzers des entsprechenden Behälters entsprechen.

Die vorliegende Erfindung betrifft ferner ein Entsorgungsfahrzeug, welches zur Durchführung des erfindungsgemäßen Verfahrens eingerichtet ist, sowie bevorzugte Ausgestaltungen eines derartigen Entsorgungsfahrzeugs.

Im Folgenden wird ein bevorzugtes Ausführungsbeispiel der vorliegenden Erfindung anhand der Zeichnung näher erläutert.

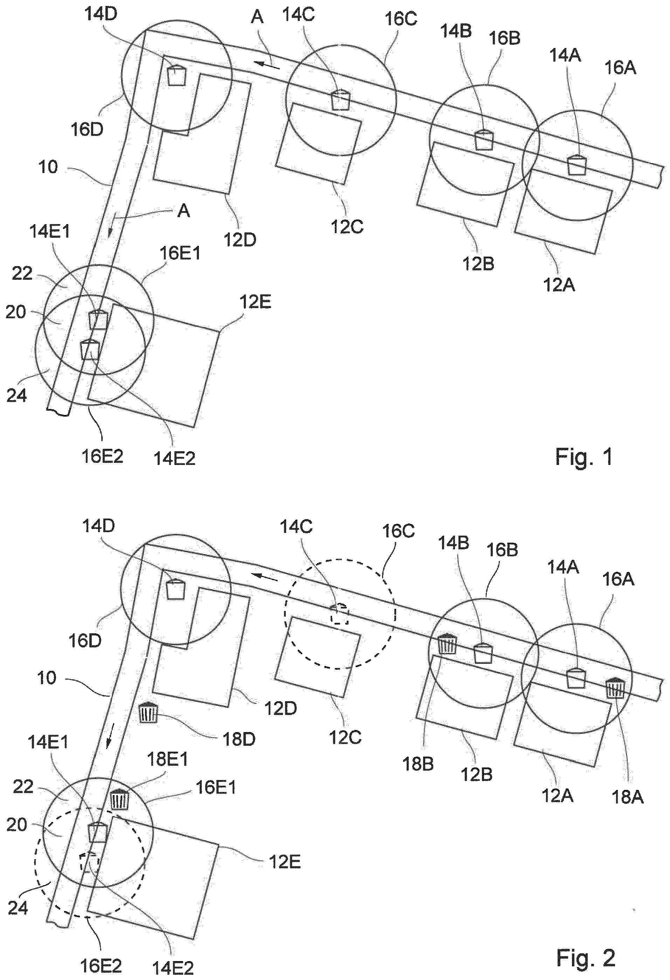

Die Figuren 1 bis 3 sind schematische Darstellungen des geografischen Bereichs einer Leerungstour eines Entsorgungsfahrzeugs, einschließlich vorbestimmter Positionen der zu leerenden Behälter, zur Erläuterung eines Ausführungsform des erfindungsgemäßen Verfahrens.

Fig. 1 zeigt schematisch einen Straßenabschnitt 10, an welchem sich Häuser 12A, 12B, 12C, 12D und 12E befinden, denen wiederum Abfallbehälter (im Folgenden kurz als "Behälter" bezeichnet) entsprechen. Bei den Häusern 12A, 12B, 12C und 12D handelt es sich um Einfamilienhäuser und jedem dieser Häuser 12A, 12B, 12C und 12D entspricht ein Behälter. Jedem Behälter ist eine Position am Straßenzug 10 zugeordnet, die einer vorbestimmten Position entspricht, an welcher der Behälter zur Leerung durch einen Entsorger erwartet wird. Dem Haus 12A entspricht die vorbestimmte Position 14A, dem Haus 12B entspricht die vorbestimmte Position 14B, dem Haus 12C entspricht die vorbestimmte Position 14C, dem Haus 12D entspricht die vorbestimmte Position 14D und dem Haus 12E entspricht die vorbestimmte Position 14E. Bei dem Haus 12E handelt es sich um ein Mehrparteienhaus, so dass dem Haus 12E zwei vorbestimmte Positionen 14E1 und 14E2 zugeordnet sind, entsprechend zwei verschiedenen Behältern.

Jeder Behälter ist auf später noch zu beschreibende Weise identifizierbar. Entsprechende Identifikationsdaten zur Identifikation des Behälters werden zusammen mit geolokalen Daten, die seiner vorbestimmten Position entsprechen, hinterlegt, also gespeichert. Bei der vorliegenden Ausführungsform des Verfahrens umfassen die geolokalen Daten ferner einen Bereich mit einer vorbestimmten Größe, der einem Geofencing-Bereich entspricht. Die Geofencing-Bereiche der Behälter sind in den Figuren 1 bis 3 durch Kreise 16A, 16B, 16C, 16D, 16E1 und 16E2 bezeichnet, in deren Mittelpunkten sich jeweils die vorbestimmten Positionen 14A, 14B, 14C, 14D, 14E1 und 14E2 der Behälter befinden. Die vorbestimmten Positionen der Behälter und die Geofencing-Bereiche können durch GPS-Daten (für: Global Positioning System) repräsentiert sein.

Diese Geofencing-Bereiche 16A bis 16E2 stellen Bereiche dar, an denen sich der entsprechende Behälter mutmaßlich befinden kann, d.h. an der erwarteten vorbestimmten Position 14A bis 14E2 mit einer tolerierten Abweichung, die dem Radius um die vorbestimmte Position 14A bis 14E2 entspricht.

Die Darstellung in Fig. 2 entspricht derjenigen aus Fig. 1, wobei hier zusätzlich die tatsächlichen Behälterpositionen dargestellt sind. Der Behälter 18A ist abweichend von seiner vorbestimmten Position 14A aufgestellt, jedoch innerhalb seines Geofencing-Bereichs 16A. Entsprechendes gilt für den Behälter 18B, der abweichend von seiner vorbestimmten Position 14B, jedoch innerhalb seines Geofencing-Bereichs 16B aufgestellt ist. Der Behälter 18D befindet sich außerhalb seines Geofencing-Bereichs 16D, d.h. in einem Abstand von seiner vorbestimmten Position 14D, der größer ist als der Radius seines Geofencing-Bereichs 16D. Der Behälter, welchem die vorbestimmte Position 14C entspricht, ist nicht vorhanden. Sein Geofencing-Bereich 16C ist daher gestrichelt dargestellt.

Ferner ist auch der Behälter, dessen vorbestimmte Position mit 14E2 bezeichnet ist, nicht vorhanden, wohl aber der Behälter 18E1, der sich wiederum innerhalb seines Geofencing-Bereichs 16E1 in geringem Abstand von seiner vorbestimmten Position 14E1 befindet.

Wie in den Figuren 1 und 2 sichtbar ist, überschneiden sich die Geofencing-Bereiche 16A und 16B. Ferner überschneiden sich die Geofencing-Bereiche 16E1 und 16E2 in einem Bereich, der durch die Bezugsziffer 20 bezeichnet ist. Der Restbereich des Geofencing-Bereichs 16E1, der sich nicht mit dem Geofencing-Bereich 16E2 überschneidet, trägt die Bezugsziffer 22, und der Restbereich des Geofencing-Bereichs 16E2, der sich nicht mit dem Geofencing-Bereich 16E1 überschneidet, trägt die Bezugsziffer 24.

Jeder Behälter ist mit einer Kennung ausgestattet, die ein elektronisch lesbares Mittel umfasst, im vorliegenden Fall einen RFID-Chip. Dieser RFID-Chip kann durch eine geeignete Leseeinrichtung an einem Entsorgungsfahrzeug ausgelesen werden. Abweichend von der vorliegenden Ausführungsform sind jedoch auch andere Mittel zur Kennung möglich, etwa optische Mittel, wie beispielsweise ein QR-Code oder dergleichen.

Passiert ein in den Figuren nicht näher dargestelltes Entsorgungsfahrzeug den Straßenzug 10, so nimmt es Bilddaten in einer Weise auf, die noch näher beschrieben wird. Zu diesem Zweck kann das Einsatzfahrzeug beispielsweise mit einer Videokamera ausgestattet sein. In der nachfolgenden Beschreibung wird angenommen, dass das Entsorgungsfahrzeug den Straßenzug 10 entlang der in Fig. 1 durch Pfeile A gekennzeichneten Richtung, beginnend mit dem Geofencing-Bereich 16A passiert, und anschließend die Geofencing-Bereiche 16B → 16C → 16D → 16E1 → 16E2.

Überschreitet das Entsorgungsfahrzeug auf seinem Weg (Pfeil A) entlang des Straßenzuges 10 die äußere Begrenzung des ersten Geofencing-Bereichs 16A, wird automatisch eine Aufnahme von Bilddaten ausgelöst. Zur Feststellung der aktuellen Position kann das Entsorgungsfahrzeug mit einem GPS-Sender ausgestattet sein. Bilddaten, die an der vorbestimmten Position 14A des Behälters 18A, nämlich innerhalb des Geofencing-Bereichs 16A aufgenommen werden, werden den Identifikationsdaten dieses Behälters 18A zugeordnet und innerhalb des Entsorgungsfahrzeugs gespeichert. An jeder vorbestimmten Position 14A, 14B, 14C, 14D, 14E1 und 14E2 werden somit durch das Entsorgungsfahrzeug aufgenommene Bilddaten den Identifikationsdaten dieses Behälters zugeordnet und gespeichert, und zwar einschließlich der vorbestimmten Positionen von Behältern, die nicht vorhanden sind. Dies betrifft im vorliegenden Ausführungsbeispiel die vorbestimmten Positionen 14C und 14E2, für welche kein Behälter vorhanden ist. Das Entsorgungsfahrzeug nimmt dennoch bei Erreichen des Geofencing-Bereichs 16C der vorbestimmten Position 14C eines nicht vorhandenen Behälters Bilddaten auf beendet die Aufnahme beim Verlassen dieses Geofencing-Bereichs 16C. Entsprechendes gilt für den Geofencing-Bereich 16E2, entsprechend der vorbestimmten Position 14E2.

Ferner führt das Entsorgungsfahrzeug während seiner Leerungstour Identfikationsvorgänge durch, in welchen die Kennungen der Behälter 18A, 18B, 18D und 18E1 mit den Identifikationsdaten abgeglichen werden. Ist ein solcher Abgleich positiv, gilt ein Behälter als erkannt. Auf diese Weise kann festgestellt werden, dass ein an einer Position erwarteter Behälter tatsächlich zur Leerung durch das Entsorgungsfahrzeug bereitgestanden hat.

Im vorliegenden Beispiel steht zunächst der Behälter 18A für das Entsorgungsfahrzeug bereit, wenn dieses in dessen Geofencing-Bereich 16A eingedrungen ist. Der Identifikationsvorgang kann beispielsweise durchgeführt werden, wenn der Behälter zur Entleerung am Entsorgungsfahrzeug aufgehängt wird. Eine dort vorgesehene Leseeinrichtung, liest den RFID-Chip aus, der als elektronisch lesbares Mittel am Behälter 18A angebracht ist. Der Behälter 18A wird somit erkannt. Ein entsprechender Vorgang wird beim Erreichen des nachfolgenden Behälters 18B ausgeführt.

Hingegen wird beim Passieren des Geofencing-Bereichs 16C der vorbestimmten Position 14C kein Behälter vorgefunden. Der Identifikationsvorgang kann somit nicht durchgeführt werden. Der Behälter, der der vorbestimmten Position 14C entspricht, gilt somit als nicht erkannt und es kann festgestellt werden, dass dieser Behälter nicht zur Entleerung bereitgestellt wurde.

Der Behälter 18D, der sich außerhalb seines Geofencing-Bereichs 16D befindet, wird ebenfalls identifiziert. Im vorliegenden Ausführungsbeispiel ist die Identifikation unabhängig davon, ob sie innerhalb oder außerhalb des Geofencing-Bereichs des identifizierten Behälters stattfindet. Gegebenenfalls kann vorgesehen sein, dass dann, wenn ein Behälter (wie hier der Behälter 18D) vor Erreichen seines Geofencing-Bereichs 16D identifiziert wird, eine Aufnahme von Bilddaten beim Erreichen seines Geofencing-Bereichs 16D nicht ausgelöst wird. Ferner kann eine Identifikation eines Behälters auch stattfinden, wenn dessen Geofencing-Bereich bereits vom Entsorgungsfahrzeug passiert und wieder verlassen wurde.

Erreicht das Entsorgungsfahrzeug schließlich den Behälter 18E1, wird dieser ebenfalls identifiziert, während für die vorbestimmte Position 14E2 kein Behälter identifiziert werden kann, weil dieser nicht vorhanden ist.

Nach Passieren des dargestellten Straßenzugs 10 sind somit Bilddaten für alle Geofencing-Bereiche 16A, 16B, 16C, 16D, 16E1 und 16E2 vorhanden, die an den vorbestimmten Positionen 14A, 14B, 14C, 14D, 14E1 und 14E2 aufgenommen wurden. Bilddaten, die an der vorbestimmten Position eines Behälters aufgenommen wurden, werden den Identifikationsdaten dieses Behälters zugeordnet und gespeichert. Dies gilt auch für Behälter, die vom Entsorgungsfahrzeug nicht identifiziert wurden, also nicht vorhanden waren. Auch die Bilddaten von Geofencing-Bereichen (wie hier den Geofencing-Bereichen 16C und 16E2), deren Behälter nicht vorhanden waren, werden somit den entsprechenden Identifikationsdaten dieser fehlenden Behälter zugeordnet.

Anschließend findet ein Löschungsvorgang statt, in welchem alle gespeicherten Bilddaten gelöscht werden, bis auf diejenigen, die zumindest einem nicht identifizierten Behälter zugeordnet sind.

Beispielsweise sind die Bilddaten, die an der vorbestimmten Position 14C und in dessen Geofencing-Bereich 16C aufgenommen wurden, einem nicht identifizierten Behälter zugeordnet. Diese Bilddaten werden nicht gelöscht und bleiben erhalten.

Ferner betrifft dies allerdings auch Bilddaten, die innerhalb des Geofencing-Bereichs 16E2 aufgenommen wurden. Außerhalb des Überschneidungsbereichs 20 des Geofencing-Bereichs 16E2 mit dem Geofencing-Bereich 16E1, also innerhalb des Restbereichs 24, sind die Bilddaten des Geofencing-Bereichs 16E2 ausschließlich einem nicht identifizierten Behälter zugeordnet, während die Bilddaten innerhalb dieses Überschneidungsbereichs 20 einerseits dem identifizierten Behälter 18E1, jedoch gleichzeitig dem nicht identifizierten Behälter zugeordnet sind, welchem die vorbestimmte Position 14E2 entspricht. Damit handelt es sich um Daten, die gleichzeitig einem identifizierten und einem nicht identifizierten Behälter zugeordnet sind. Solche Bilddaten werden ebenfalls nicht gelöscht.

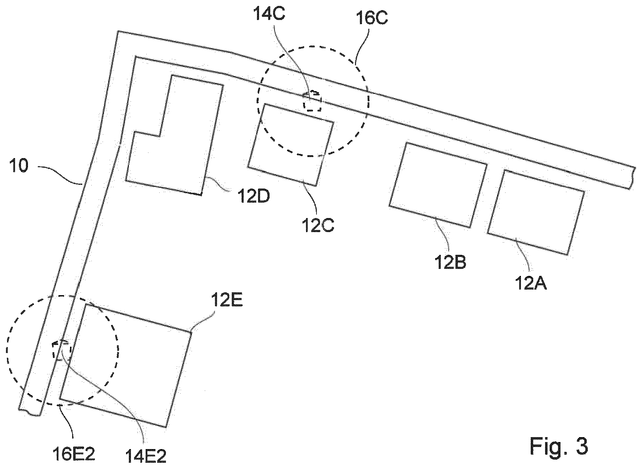

Es bleiben somit diejenigen Bilddaten gespeichert, die den Geofencing-Bereichen 16E2 und 16C entsprechen, wie in Fig. 3 dargestellt.

Diese nicht gelöschten Bilddaten können vom Entsorgungsfahrzeug drahtlos von einer zentralen Verwaltungseinheit abgerufen werden, in der eine weitere Verarbeitung stattfindet. Noch vor einer solchen Übertragung bzw. vor einem solchen Abruf kann durch eine Softwareeinrichtung im Entsorgungsfahrzeug eine Prüfung der nicht gelöschten Bilddaten auf kritische Inhalte durchgeführt werden, so dass z.B. Gesichter von Personen, Nummernschilder oder andere Daten automatisch unkenntlich gemacht werden. Dies kann durch eine Software erfolgen, die eine künstliche Intelligenz einsetzt, beispielsweise auch ein neuronales Netz, das durch maschinelles Lernen trainiert worden ist. Grundsätzlich kann eine derartige Prüfung der nicht gelöschten Bilddaten auf kritische Inhalte allerdings auch nach dem Abruf durch eine zentrale Verwaltungseinheit in dieser selbst durchgeführt werden.

Während des oben beschriebenen Identifikationsvorgangs eines Behälters kann die tatsächliche Position des Behälters während dieses Identifikationsvorgangs festgestellt werden, und die Abweichung von einer vorbestimmten Position kann gespeichert werden und später ausgewertet werden. Dies kann von Nutzen sein, um die vorbestimmte Position des Behälters bei einer größeren Abweichung zwischen vorbestimmter Position und tatsächlicher festgestellter Position anzupassen. Somit kann die hinterlegte vorbestimmte Position dieses Behälters aktualisiert werden, indem sie durch die bei der aktuellen Leerung bestimmte Position dieses Behälters ersetzt wird und bei einer nachfolgend wiederholten Leerungstour (also einer erneuten Durchführung des Verfahrens) die vorbestimmte, also erwartete Position dieses Behälters darstellt.

## Patentansprüche

1. Verfahren zum Nachweis der Bereitstellung zumindest eines Behälters (18A, 18B, 18D, 18E1), der durch ein Entsorgungsfahrzeug zu entleeren ist, umfassend die folgenden Schritte:
- Bereitstellung von Identifikationsdaten zur Identifikation von Behältern (18A, 18B, 18D, 18E1) und von geolokalen Daten, die vorbestimmten Positionen (14A, 14B, 14C, 14D, 14E1, 14E2) der Behälter (18A, 18B, 18D, 18E1) entsprechen,
- Aufnahme von Bilddaten durch ein Entsorgungsfahrzeug an allen vorbestimmten Positionen (14A, 14B, 14C, 14D, 14E1, 14E2) der Behälter (18A, 18B, 18D, 18E1), wobei an jeder vorbestimmten Position (14A, 14B, 14C, 14D, 14E1, 14E2) eines Behälters (18A, 18B, 18D, 18E1) aufgenommene Bilddaten den Identifikationsdaten dieses Behälters (18A, 18B, 18D, 18E1) zugeordnet werden und gespeichert werden,
- Durchführung eines Identifikationsvorgangs durch das Entsorgungsfahrzeug durch Abgleich der Identifikationsdaten mit einer Kennung an einem zur Leerung bereitgestellten Behälter (18A, 18B, 18D, 18E1),
- Löschung der Bilddaten, bis auf diejenigen, die zumindest einem nicht identifizierten Behälter zugeordnet sind.

2. Verfahren nach Anspruch 1, **dadurch gekennzeichnet, dass** die geolokalen Daten einen Bereich (16A, 16B, 16C, 16D, 16E1, 16E2) mit einer vorbestimmten Größe umfassen.

3. Verfahren nach Anspruch 1 oder 2, **dadurch gekennzeichnet, dass** die Kennung am Behälter (18A, 18B, 18D, 18E1) ein optisch und/oder elektronisch lesbares Mittel umfasst.

4. Verfahren nach einem der vorherigen Ansprüche, **dadurch gekennzeichnet, dass** die nicht gelöschten Bilddaten drahtlos von einer zentralen Datenverwaltungseinheit abgerufen werden.

5. Verfahren nach einem der vorherigen Ansprüche, **dadurch gekennzeichnet, dass** die nicht gelöschten Bilddaten automatisch auf kritische Inhalte geprüft werden und kritische Inhalte innerhalb der Bilddaten automatisch unkenntlich gemacht werden.

6. Verfahren nach Anspruch 5, **dadurch gekennzeichnet, dass** die Prüfung und Unkenntlichmachung der Bilddaten über eine künstliche Intelligenz erfolgt.

7. Verfahren nach einem der vorherigen Ansprüche, **dadurch gekennzeichnet, dass** die Position des Identifikationsvorgangs des zur Leerung bereitgestellten Behälters (18A, 18B, 18D, 18E1) mit der vorbestimmten Position (14A, 14B, 14C, 14D, 14E1, 14E2) abgeglichen wird.

8. Verfahren nach Anspruch 7, **dadurch gekennzeichnet, dass** die Position des Identifikationsvorgangs des zur Leerung bereitgestellten Behälters (18A, 18B, 18D, 18E1) bei einer Abweichung von der vorbestimmten Position (14A, 14B, 14C, 14D, 14E1, 14E2) gespeichert wird.

9. Verfahren nach Anspruch 7 oder 8, **dadurch gekennzeichnet, dass** die Position des Identifikationsvorgangs des zur Leerung bereitgestellten Behälters (18A, 18B, 18D, 18E1) für eine nachfolgende erneute Durchführung des Verfahrens als aktualisierte vorbestimmte Position (14A, 14B, 14C, 14D, 14E1, 14E2) dieses Behälters (18A, 18B, 18D, 18E1) bereitgestellt wird.

10. Verfahren nach einem der vorherigen Ansprüche, **dadurch gekennzeichnet, dass** die Identifikationsdaten nutzerbezogene Daten umfassen, die der Identität eines Nutzers des entsprechenden Behälters (18A, 18B, 18D, 18E1) entsprechen.

11. Entsorgungsfahrzeug, eingerichtet zur Durchführung eines Verfahrens zum Nachweis der Bereitstellung zumindest eines Behälters (18A, 18B, 18D, 18E1), der durch das Entsorgungsfahrzeug zu entleeren ist, welches Verfahren die folgenden Schritte umfasst:
- lokale Speicherung von Identifikationsdaten zur Identifikation von Behältern (18A, 18B, 18D, 18E1), zusammen mit geolokalen Daten, die vorbestimmten Positionen (14A, 14B, 14C, 14D, 14E1, 14E2) der Behälter (18A, 18B, 18D, 18E1) entsprechen,
- Aufnahme von Bilddaten durch das Entsorgungsfahrzeug an allen vorbestimmten Positionen (14A, 14B, 14C, 14D, 14E1, 14E2) der Behälter (18A, 18B, 18D, 18E1), wobei an jeder vorbestimmten Position (14A, 14B, 14C, 14D, 14E1, 14E2) eines Behälters (18A, 18B, 18D, 18E1) aufgenommene Bilddaten den Identifikationsdaten dieses Behälters (18A, 18B, 18D, 18E1) zugeordnet werden und gespeichert werden,
- Durchführung eines Identifikationsvorgangs durch das Entsorgungsfahrzeug durch Abgleich der Identifikationsdaten mit einer Kennung an einem zur Leerung bereitgestellten Behälter (18A, 18B, 18D, 18E1),
- Löschung der Bilddaten, bis auf diejenigen, die zumindest einem nicht identifizierten Behälter zugeordnet sind.

12. Entsorgungsfahrzeug nach Anspruch 11, **dadurch gekennzeichnet, dass** die nicht gelöschten Bilddaten automatisch auf kritische Inhalte geprüft werden und kritische Inhalte innerhalb der Bilddaten automatisch unkenntlich gemacht werden.

13. Entsorgungsfahrzeug nach Anspruch 12, **dadurch gekennzeichnet, dass** die Prüfung und Unkenntlichmachung der Bilddaten über eine künstliche Intelligenz erfolgt.

14. Entsorgungsfahrzeug nach einem der vorherigen Ansprüche 11 bis 13, **dadurch gekennzeichnet, dass** die Position des Identifikationsvorgangs des zur Leerung bereitgestellten Behälters (18A, 18B, 18D, 18E1) mit der vorbestimmten Position (14A, 14B, 14C, 14D, 14E1, 14E2) abgeglichen wird.

15. Entsorgungsfahrzeug nach Anspruch 14, **dadurch gekennzeichnet, dass** die Position des Identifikationsvorgangs des zur Leerung bereitgestellten Behälters (18A, 18B, 18D, 18E1) bei einer Abweichung von der vorbestimmten Position (14A, 14B, 14C, 14D, 14E1, 14E2) gespeichert wird.

16. Entsorgungsfahrzeug nach Anspruch 14 oder 15, **dadurch gekennzeichnet, dass** die Position des Identifikationsvorgangs des zur Leerung bereitgestellten Behälters (18A, 18B, 18D, 18E1) für eine erneute Durchführung des Verfahrens als aktualisierte vorbestimmte Position (14A, 14B, 14C, 14D, 14E1, 14E2) dieses Behälters (18A, 18B, 18D, 18E1) bereitgestellt wird.

## Claims

1. Method for detecting the provision of at least one container (18A, 18B, 18D, 18E1) which is to be emptied by a disposal vehicle, comprising the following steps:
- providing identification data for identifying containers (18A, 18B, 18D, 18E1) and geolocal data which correspond to predetermined positions (14A, 14B, 14C, 14D, 14E1, 14E2) of the containers (18A, 18B, 18D, 18E1),
- recording image data by a disposal vehicle at all predetermined positions (14A, 14B, 14C, 14D, 14E1, 14E2) of the containers (18A, 18B, 18D, 18E1), wherein image data recorded at each predetermined position (14A, 14B, 14C, 14D, 14E1, 14E2) of a container (18A, 18B, 18D, 18E1) are assigned to the identification data of this container (18A, 18B, 18D, 18E1) and are stored,
- carrying out an identification operation by the disposal vehicle by comparing the identification data with an identifier on a container (18A, 18B, 18D, 18E1) which is provided for emptying,
- deleting the image data, except for those which are assigned to at least one unidentified container.

2. Method according to Claim 1, **characterized in that** the geolocal data comprise an area (16A, 16B, 16C, 16D, 16E1, 16E2) with a predetermined size.

3. Method according to Claim 1 or 2, **characterized in that** the identifier on the container (18A, 18B, 18D, 18E1) comprises an optically and/or electronically readable means.

4. Method according to one of the preceding claims, **characterized in that** the undeleted image data are retrieved wirelessly by a central data management unit.

5. Method according to one of the preceding claims, **characterized in that** the undeleted image data are automatically checked for critical contents and critical contents within the image data are automatically made unrecognizable.

6. Method according to Claim 5, **characterized in that** the checking and making the image data unrecognizable takes place via an artificial intelligence.

7. Method according to one of the preceding claims, **characterized in that** the position of the identification operation of the container (18A, 18B, 18D, 18E1) which is provided for emptying is compared with the predetermined position (14A, 14B, 14C, 14D, 14E1, 14E2).

8. Method according to Claim 7, **characterized in that** the position of the identification operation of the container (18A, 18B, 18D, 18E1) which is provided for emptying is stored in the event of a deviation from the predetermined position (14A, 14B, 14C, 14D, 14E1, 14E2).

9. Method according to Claim 7 or 8, **characterized in that** the position of the identification operation of the container (18A, 18B, 18D, 18E1) which is provided for emptying is provided as an updated predetermined position (14A, 14B, 14C, 14D, 14E1, 14E2) of this container (18A, 18B, 18D, 18E1) for a subsequent renewed carrying out of the method.

10. Method according to one of the preceding claims, **characterized in that** the identification data comprise user-related data which correspond to the identity of a user of the corresponding container (18A, 18B, 18D, 18E1).

11. Disposal vehicle which is set up to carry out a method for detecting the provision of at least one container (18A, 18B, 18D, 18E1) which is to be emptied by the disposal vehicle, which method comprises the following steps:
- locally storing identification data for identifying containers (18A, 18B, 18D, 18E1), together with geolocal data which correspond to predetermined positions (14A, 14B, 14C, 14D, 14E1, 14E2) of the containers (18A, 18B, 18D, 18E1),
- recording image data by the disposal vehicle at all predetermined positions (14A, 14B, 14C, 14D, 14E1, 14E2) of the containers (18A, 18B, 18D, 18E1), wherein image data recorded at each predetermined position (14A, 14B, 14C, 14D, 14E1, 14E2) of a container (18A, 18B, 18D, 18E1) are assigned to the identification data of this container (18A, 18B, 18D, 18E1) and are stored,
- carrying out an identification operation by the disposal vehicle by comparing the identification data with an identifier on a container (18A, 18B, 18D, 18E1) which is provided for emptying,
- deleting the image data, except for those which are assigned to at least one unidentified container.

12. Disposal vehicle according to Claim 11, **characterized in that** the undeleted image data are automatically checked for critical contents and critical contents within the image data are automatically made unrecognizable.

13. Disposal vehicle according to Claim 12, **characterized in that** the checking and making the image data unrecognizable takes place via an artificial intelligence.

14. Disposal vehicle according to one of the preceding Claims 11 to 13, **characterized in that** the position of the identification operation of the container (18A, 18B, 18D, 18E1) which is provided for emptying is compared with the predetermined position (14A, 14B, 14C, 14D, 14E1, 14E2).

15. Disposal vehicle according to Claim 14, **characterized in that** the position of the identification operation of the container (18A, 18B, 18D, 18E1) which is provided for emptying is stored in the event of a deviation from the predetermined position (14A, 14B, 14C, 14D, 14E1, 14E2).

16. Disposal vehicle according to Claim 14 or 15, **characterized in that** the position of the identification operation of the container (18A, 18B, 18D, 18E1) which is provided for emptying is provided as an updated predetermined position (14A, 14B, 14C, 14D, 14E1, 14E2) of this container (18A, 18B, 18D, 18E1) for a renewed carrying out of the method.

## Revendications

1. Procédé destiné à détecter la fourniture d'au moins un conteneur (18A, 18B, 18D, 18E1) qui doit être vidé par un véhicule de collecte de déchets, comprenant les étapes suivantes consistant à :
- fournir des données d'identification pour identifier des conteneurs (18A, 18B, 18D, 18E1), et des données géolocalisées correspondant à des positions prédéfinies (14A, 14B, 14C, 14D, 14E1, 14E2) des conteneurs (18A, 18B, 18D, 18E1),
- enregistrer des données d'image par un véhicule de collecte de déchets à toutes les positions prédéterminées (14A, 14B, 14C, 14D, 14E1, 14E2) des conteneurs (18A, 18B, 18D, 18E1), dans lequel des données d'image enregistrées à chaque position prédéterminée (14A, 14B, 14C, 14D, 14E1, 14E2) d'un conteneur (18A, 18B, 18D, 18E1) sont affectées aux données d'identification de ce conteneur (18A, 18B, 18D, 18E1) et sont stockées,
- exécuter une opération d'identification par le véhicule de collecte de déchets en comparant les données d'identification avec un identifiant sur un conteneur (18A, 18B, 18D, 18E1) fourni en vue d'un vidage,
- supprimer les données d'image, à l'exception de celles affectées à au moins un conteneur non identifié.

2. Procédé selon la revendication 1, **caractérisé en ce que** les données géolocalisées comprennent une zone (16A, 16B, 16C, 16D, 16E1, 16E2) ayant une taille prédéterminée.

3. Procédé selon la revendication 1 ou 2, **caractérisé en ce que** l'identifiant sur le conteneur (18A, 18B, 18D, 18E1) comprend un moyen lisible optiquement et/ou électroniquement.

4. Procédé selon l'une des revendications précédentes, **caractérisé en ce que** les données d'image non supprimées sont récupérées de manière sans fil à partir d'une unité centrale de gestion de données.

5. Procédé selon l'une des revendications précédentes, **caractérisé en ce que** le contenu critique des données d'image non supprimées est vérifié automatiquement et des contenus critiques dans les données d'image sont automatiquement non identifiables.

6. Procédé selon la revendication 5, **caractérisé en ce que** la vérification et l'impossibilité d'identifier les données d'image sont obtenues par une intelligence artificielle.

7. Procédé selon l'une des revendications précédentes, **caractérisé en ce que** la position de l'opération d'identification du conteneur (18A, 18B, 18D, 18E1) fourni en vue d'un vidage est comparée avec la position prédéterminée (14A, 14B, 14C, 14D, 14E1, 14E2).

8. Procédé selon la revendication 7, **caractérisé en ce que** la position de l'opération d'identification du conteneur (18A, 18B, 18D, 18E1) fourni en vue d'un vidage est stockée en cas d'écart par rapport à la position prédéterminée (14A, 14B, 14C, 14D, 14E1, 14E2).

9. Procédé selon la revendication 7 ou 8, **caractérisé en ce que** la position de l'opération d'identification du conteneur (18A, 18B, 18D, 18E1) fourni en vue d'un vidage est fournie comme une position prédéterminée mise à jour (14A, 14B, 14C, 14D, 14E1, 14E2) de ce conteneur (18A, 18B, 18D, 18E1) pour une nouvelle mise en œuvre ultérieure du procédé.

10. Procédé selon l'une des revendications précédentes, **caractérisé en ce que** les données d'identification comprennent des données liées à l'utilisateur, qui correspondent à l'identité d'un utilisateur du conteneur (18A, 18B, 18D, 18E1) correspondant.

11. Véhicule de collecte de déchets conçu pour mettre en œuvre un procédé destiné à détecter la fourniture d'au moins un conteneur (18A, 18B, 18D, 18E1) qui doit être vidé par le véhicule de collecte de déchets, lequel procédé comprend les étapes suivantes consistant à :
- stocker localement des données d'identification pour identifier des conteneurs (18A, 18B, 18D, 18E1), conjointement avec des données géolocalisées correspondant à des positions prédéfinies (14A, 14B, 14C, 14D, 14E1, 14E2) des conteneurs (18A, 18B, 18D, 18E1),
- enregistrer des données d'image par le véhicule de collecte de déchets à toutes les positions prédéterminées (14A, 14B, 14C, 14D, 14E1, 14E2) des conteneurs (18A, 18B, 18D, 18E1), dans lequel des données d'image enregistrées à chaque position prédéterminée (14A, 14B, 14C, 14D, 14E1, 14E2) d'un conteneur (18A, 18B, 18D, 18E1) sont affectées aux données d'identification de ce conteneur (18A, 18B, 18D, 18E1) et sont stockées,
- exécuter une opération d'identification par le véhicule de collecte de déchets en comparant les données d'identification avec un identifiant sur un conteneur (18A, 18B, 18D, 18E1) fourni en vue d'un vidage,
- supprimer les données d'image, à l'exception de celles affectées à au moins un conteneur non identifié.

12. Véhicule de collecte de déchets selon la revendication 11, **caractérisé en ce que** le contenu critique des données d'image non supprimées est automatiquement vérifié et des contenus critiques dans les données d'image sont automatiquement non identifiables.

13. Véhicule de collecte de déchets selon la revendication 12, **caractérisé en ce que** la vérification et l'impossibilité d'identifier les données d'image sont obtenues par une intelligence artificielle.

14. Véhicule de collecte de déchets selon l'une des revendications 11 à 13 précédentes, **caractérisé en ce que** la position de l'opération d'identification du conteneur (18A, 18B, 18D, 18E1) fourni en vue d'un vidage est comparée avec la position prédéterminée (14A, 14B, 14C, 14D, 14E1, 14E2).

15. Véhicule de collecte de déchets selon la revendication 14, **caractérisé en ce que** la position de l'opération d'identification du conteneur (18A, 18B, 18D, 18E1) fourni en vue d'un vidage est stockée en cas d'écart par rapport à la position prédéterminée (14A, 14B, 14C, 14D, 14E1, 14E2).

16. Véhicule de collecte de déchets selon la revendication 14 ou 15, **caractérisé en ce que** la position de l'opération d'identification du conteneur (18A, 18B, 18D, 18E1) fourni pour être vidé est fournie comme une position prédéterminée mise à jour (14A, 14B, 14C, 14D, 14E1), 14E2) de ce conteneur (18A, 18B, 18D, 18E1) pour une nouvelle mise en œuvre du procédé.
